# FASCICULE DE BREVET EUROPEEN

(11) **EP 1 926 363 B1**
(45) Date de publication et mention de la délivrance du brevet: **12.11.2014**
(21) Numéro de dépôt: 06808286.6
(22) Date de dépôt: 06.09.2006
(51) Int. Cl.: A01B 73/02, A01D 78/10

(54) **MACHINE DE FENAISON AVEC DES STRUCTURES LATÉRALES REPLIABLES**
HEUWERBUNGSMASCHINE MIT EINKLAPPBAREN SEITLICHEN BAUTEILEN
HAYING MACHINE WITH FOLDABLE LATERAL STRUCTURES

(30) Priorité: 09.09.2005 FR 0552724
(43) Date de publication de la demande: 04.06.2008
(73) Titulaire: KUHN S.A., 67700 Saverne (FR)
(72) Inventeur: QUIRIN, Michel, 67310 Allenwiller (FR); NEUERBURG, Horst, 67700 Saverne (FR)
(74) Mandataire: Esch, Esther Evelyne
(86) Numéro de dépôt international: PCT/FR2006/050847
(87) Numéro de publication internationale: WO 2007/028926

(56) Documents cités:
- EP-A- 0 806 133
- EP-A- 0 903 067
- EP-A- 1 488 685
- EP-A- 1 495 666

## Description

La présente invention se rapporte à une machine de fenaison, notamment une faneuse, comportant un bâti portant plusieurs rotors de fanage pouvant être entraînés en rotation autour d'axes verticaux ou inclinés vers une direction d'avancement et possédant des bras porte-fourches qui sont disposés à des distances sensiblement régulières les uns des autres; lesquels rotors peuvent occuper une position de travail dans laquelle ils sont alignés sur une ligne sensiblement perpendiculaire au sens d'avancement et dans laquelle les bras porte-fourches de chaque rotor pénètrent dans les intervalles entre les bras porte-fourches des rotors voisins et une position de transport dans laquelle des rotors sont repliés vers le milieu de la machine en vue de réduire sa largeur.

Sur une machine de ce genre, connue dans le brevet EP 454 602, le repliage des rotors pour le transport s'effectue vers le haut. Dans ce cas les deux rotors qui se situent au milieu de la machine restent en place et les rotors latéraux sont relevés autour d'axes sensiblement horizontaux pour être amenés sensiblement au-dessus desdits rotors du milieu. Ce mode de réalisation présente l'inconvénient qu'il ne peut pas s'appliquer à des machines de très grande largeur étant donné que la hauteur de la machine au transport deviendrait trop importante.

Sur une autre machine de ce genre, connue dans le brevet EP 806 133, les rotors sont repliés vers le haut et vers l'avant pour le transport. Le repliage vers l'avant permet d'avoir plus de rotors et donc une plus grande largeur de travail sans que la hauteur de la machine soit trop importante au transport. Toutefois, sur cette machine connue, les deux rotors qui se situent au milieu restent en place pour le transport et seuls les rotors latéraux sont pivotés vers l'avant autour d'axes sensiblement verticaux. Pour que ce pivotement puisse avoir lieu, il faut d'abord soulever les rotors latéraux, en vue de les éloigner des rotors du milieu, afin d'éviter que leurs bras porte-fourches n'entrent en collision avec ceux de ces derniers. Ce mode de réalisation nécessite ainsi des vérins hydrauliques supplémentaires et un agencement particulier du bâti qui porte les rotors pour pouvoir effectuer ces opérations. Cela augmente le poids et le prix de la machine et complique la manoeuvre. Une machine correspondant au préambule de la revendication 1 est connue du brevet EP 1495666.

La présente invention a pour but de proposer une faneuse n'ayant pas les inconvénients des machines connues. Cette machine avec une grande largeur de travail doit pouvoir facilement et rapidement être transposée dans une position de transport dans laquelle elle est aisément déplaçables sur les chemins et les routes.

A cet effet, une importante caractéristique de l'invention consiste en ce que le bâti de la machine comprend une structure centrale qui est démunie de rotors et deux structures latérales qui portent tous les rotors est en ce que la structure centrale se compose d'une partie avant munie de roues et d'une partie arrière qui est articulée sur ladite partie avant et qui porte des axes sensiblement verticaux sur lesquels sont articulées les structures latérales et autour desquels ces structures latérales sont déplaçables avec tous les rotors vers l'avant pour le transport.

En raison de ce déplacement de tous les rotors autour des axes d'articulation des structures latérales, il n'est pas nécessaire de séparer des rotors avant la mise en position de transport. De ce fait, la transposition est grondement facilitée. D'autre part, la partie arrière et les rotors peuvent suivre, facilement et indépendamment de la partie avant, les reliefs du sol durant le travail et être portés par les roues de la partie avant durant le transport.

Selon une autre caractéristique de l'invention, les axes d'articulation des structures latérales sur la structure centrale se situent entre les axes de rotation des deux rotors situés au milieu de la machine. Grâce à cette disposition, les deux rotors situés au milieu de la machine pivotent avec les structures latérales et se rapprochent plus l'un de l'autre lors de la mise en position de transport. De ce fait, la largeur de la machine peut être davantage réduite pour le transport, ce qui favorise les déplacements sur les chemins et les routes.

Selon une autre caractéristique de l'invention, ladite partie arrière de la structure centrale est articulée sur la partie avant au moyen d'une articulation à axes sensiblement horizontaux qui sont solidaires de la partie arrière et sont guidés dans des orifices allongés verticalement de la partie avant. Le guidage d'au moins un de ces axes est réalisé de manière à limiter les déplacements latéraux vers la droite et vers la gauche de la partie arrière par rapport à la partie avant. Entre la partie avant et la partie arrière de la structure centrale est disposé un organe de réglage permettant de pivoter ladite partie arrière et les structures latérales avec les rotors correspondants autour des axes d'articulation sensiblement horizontaux. De cette manière, il est possible de modifier aisément l'inclinaison des axes de rotation des rotors pour obtenir un fanage efficace de tous les types de fourrage et pour la transposition de la position de travail dans la position de transport et vice versa.

Selon une autre caractéristique de l'invention, la structure centrale du bâti comporte des roues d'appui disposées sur des supports déplaçables dans le sens de la hauteur notamment en vue du réglage de la garde au sol lors de la transposition de la machine de la position de travail dans la position de transport et vice versa. Au transport, les rotors de fanage peuvent ainsi être considérablement éloignés du sol en vue de faciliter les déplacements.

D'autres caractéristiques et avantages de l'invention ressortiront de la description qui va suivre et qui se réfère aux dessins annexés qui représentent, à titre d'exemple non limitatif, une forme de réalisation d'une machine selon l'invention.

Dans ces dessins :
- la figure 1 représente une vue de dessus partielle d'une machine selon l'invention en position de travail,
- la figure 2 représente une vue de dessus de la machine en position de transport,
- la figure 3 représente une vue de côté de la machine en position de transport, .
- la figure 4 représente une vue de détail d'une partie du bâti de la machine.

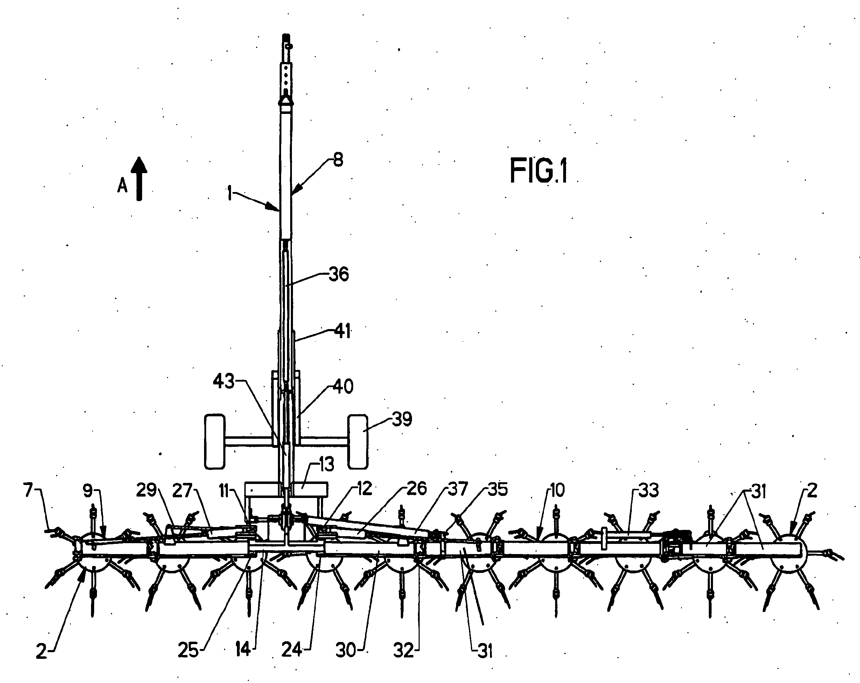

Telle qu'elle est représentée sur les figures 1, 2 et 3, la machine selon invention est une faneuse de fourrage comportant un bâti (1) pouvant être accouplé à un tracteur servant à l'animer et à la déplacer dans une direction d'avancement (A). Le bâti (1) porte plusieurs rotors de fanage (2) pouvant occuper une position de travail dans laquelle ils sont sensiblement perpendiculaires à la direction d'avancement (A) et une position de transport dans laquelle les rotors (2) sont repliés vers le milieu et vers l'avant de la machine en vue de réduire sa largeur et sa hauteur.

Chaque rotor de fanage (2) comporte un moyeu (3) monté rotatif sur un axe (4) qui est relié au bâti (1) et qui est sensiblement vertical ou incliné dans la direction d'avancement (A). La partie supérieure de chaque axe (4) constitue l'axe de rotation (4') du rotor (2) correspondant, tandis que sa partie inférieure porte une roue (5) qui pend appui sur le sol dans la position de travail. Chaque moyeu (3) est muni de bras (6) qui s'étendent en formé de rayons et qui sont disposés à des distances sensiblement régulières les uns des autres. Chacun de ces bras (6) porte à son extrémité éloignée du moyeu (3) correspondant une fourche de travail (7). Dans la position de travail (figure 1) les bras porte-fourches (6) de chaque rotor (2) pénètrent dans les intervalles entre les bras porte-fourches (6) des rotors (2) voisins de sorte que les trajectoires de leurs fourches de travail (7) se recouvrent partiellement.

Le bâti (1) comprend une structure centrale (8) qui est démunie de rotors de fanage (2) et deux structures latérales (9 et 10) qui portent tous les rotors (2). L'une de ces structures latérales (9 et 10) se situe sur le côté droit et l'autre sur le côté gauche de la structure centrale (8). Elles sont articulées sur la structure centrale (8) au moyen d'axes (11 et 12) sensiblement verticaux autour desquels elles peuvent être déplacées avec tous les rotors (2) vers l'avant dans la position de transport. Ces axes sensiblement verticaux (11 et 12) se situent entre les axes de rotation (4) des deux rotors (2) situés au milieu de la machine. Ces deux rotors (2) se rapprochent ainsi l'un de l'autre lors de la mise en position de transport.

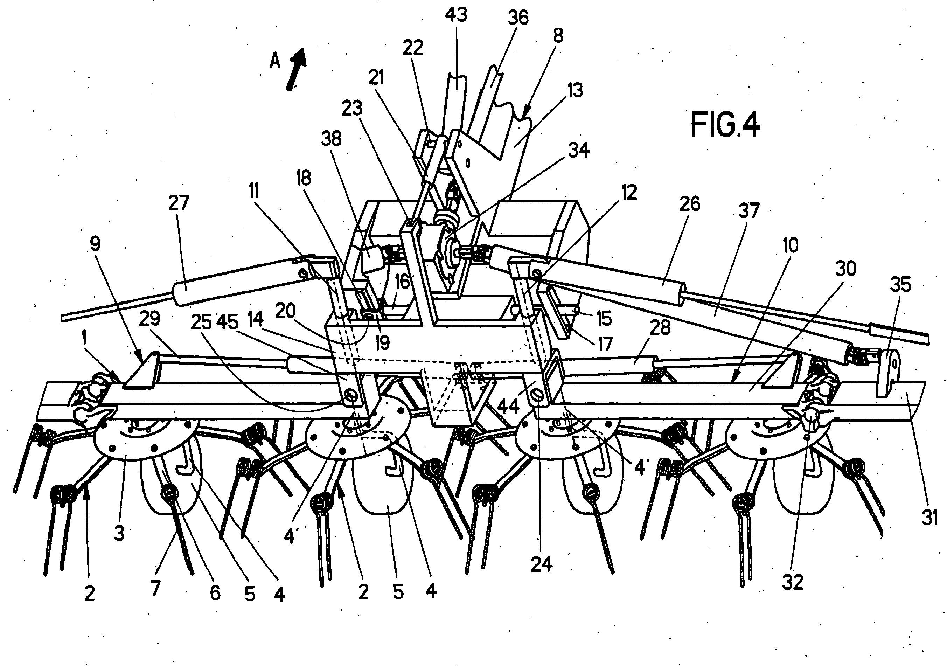

La structure centrale (8) se compose de deux parties, une partie avant (13) et une partie arrière (14), articulées entre elles. La partie avant (13) est destinée à être accrochée à un tracteur. La partie arrière (14) porte les axes d'articulation (11 et 12) sensiblement verticaux des structures latérales (9 et 10). Il ressort de la figure 4 qu'elle comporte en sus deux axes d'articulation sensiblement horizontaux (15 et 16) qui sont alignés et sont dirigés vers les côtés. Ces deux axes (15 et 16) sont guidés dans des orifices (17 et 18) de forme allongée verticalement de la partie avant (13). Ces orifices (17 et 18) permettent à la partie arrière (14) et aux structures latérales (9 et 10) de se déplacer en hauteur pour favoriser l'adaptation des rotors (2) aux dénivellations du sol indépendamment de la partie avant. L'axe (16) est guidé dans son orifice (18) à travers une chape (19) avec un axe (20) dirigé dans la direction d'avancement (A). Cet axe (20) et la chape (19) limitent les déplacements de la partie arrière (14), latéralement vers le côté droit et vers le côté gauche, par rapport à la partie avant (13). Le deuxième axe (15) sensiblement horizontal pourrait également être équipé d'une telle chape (19).

Un organe de réglage (21) relie la partie avant (13) à la parie arrière (14) en passant à une certaine distance au-dessus des axes d'articulation (15 et 16) sensiblement horizontaux. Cet organe de réglage (21) est articulé sur la partie avant (13) au moyen d'un axe (22) et sur la partie arrière (14) au moyen d'un axe (23) et peut être raccourci ou allongé afin de faire pivoter la partie arrière (14) autour des axes articulation (15 et 16) en vue d'une modification de l'angle d'inclinaison des axes de rotation (4') des rotors (2). Cet organe de réglage (21) peut être une vis ou un vérin hydraulique par exemple.

Chaque structure latérale (9, 10) comporte un axe d'articulation (24, 25) sensiblement horizontal et dirigé dans la direction d'avancement (A) en position de travail et autour duquel elle peut pivoter par rapport à la partie arrière (14) de la structure centrale (8). Cet axe (24, 25) est disposé sur une partie de chaque structure latérale (9, 10) qui se situe entre les axes de rotation (4') des deux rotors (2) situés au milieu de la machine. Comme cela est représenté sur la figure 4, cet axe d'articulation (24, 25) se situe dans un même plan sensiblement vertical que l'axe d'articulation (11, 12) sensiblement vertical de la structure latérale (9, 10) correspondante et il est relié audit axe (11, 12) sensiblement vertical au moyen d'une pièce en forme de U (44, 45) renversé. De cette manière les deux axes (12 et 24 ; 11 et 25) peuvent tourner ensemble lors de la mise en position de transport et inversement.

Un premier vérin hydraulique (26, 27) est associé à chaque structure latérale (9, 10) pour la déplacer autour de l'axe d'articulation (24, 25) sensiblement horizontal correspondant. Chaque premier vérin hydraulique (26, 27) est relié à une des structures latérales (9, 10) et à l'extrémité supérieure de l'axe d'articulation (11, 12) sensiblement vertical correspondant.

Un deuxième vérin hydraulique (28, 29) est associé à chaque structure latérale (9, 10) pour la déplacer autour de l'axe d'articulation (11, 12) sensiblement vertical. Chaque deuxième vérin hydraulique (28, 29) est relié à une des structures latérales (9, 10) et à la partie arrière (14) de la structure centrale (8).

Chaque structure latérale (9, 10) comporte un tronçon intérieur (30) portant deux rotors (2) et cinq tronçons latéraux (31) portant chacun un rotor (2). Le nombre des ces tronçons latéraux (31) peut varier en fonction de la largeur sur laquelle la machine doit pouvoir travailler. Sur la figure 1, le côté droit montre la machine complète tandis que le côté gauche ne montre qu'une partie de la machine pour favoriser la représentation de l'ensemble à une plus grande échelle. Les différents tronçons (30 et 31) de chaque structure latérale (9, 10) sont reliés entre eux au moyen d'axe d'articulation (32) dirigés dans la direction d'avancement (A) en position de travail. Ces axes d'articulation (32) permettent aux tronçons (30 et 31) de pivoter les uns par rapport aux autres pour suivre les dénivellations du sol. Lesdits pivotements sont limités au moyen de butées situées de part et d'autre des axes (32).

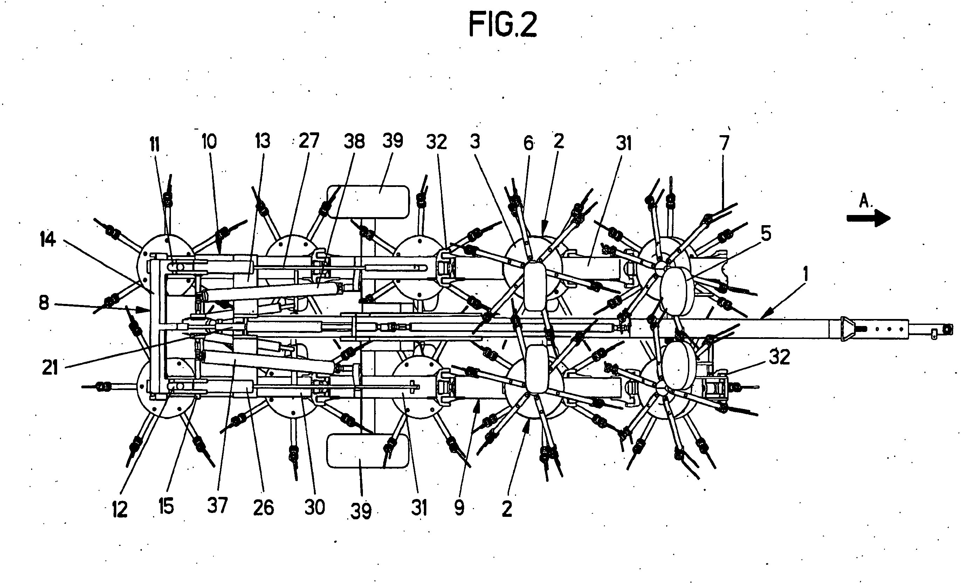

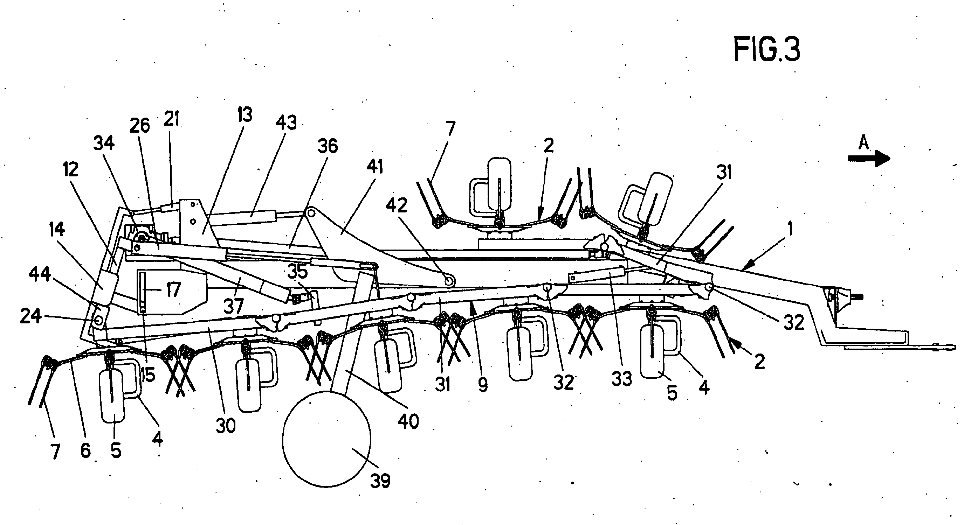

Chaque structure latérale (9, 10) comporte deux tronçons latéraux (31) situés les plus à l'extérieur qui sont repliables d'un angle d'environ 180° autour de l'axe d'articulation (32) de l'avant dernier tronçon latéral (31). Ceci permet de replier les tronçons latéraux (31) extérieurs sur les tronçons (31) voisins en vue de réduire la largeur des structures latérales (9 et 10) notamment en vue du transport (voir figures 2 et 3). Le nombre de tronçons latéraux (31) repliables peut varier en fonction de la largeur de la machine. Ledit repliage est assuré sur chaque côté au moyen de troisièmes vérins hydrauliques (33). Ceux-ci sont articulés sur l'avant dernier tronçon latéral (31) et sur le troisième tronçon latéral (31) en partant de l'extérieur.

La machine comporte des moyens d'entraînement en rotation des rotors (2) à partir d'un arbre de prise de force du tracteur. Ces moyens incluent un carter d'entraînement primaire (34) disposé sur la partie avant (13) de la structure centrale (8) et un carter d'entraînement secondaire (35) sur chaque structure latérale (9, 10). Le mouvement d'entraînement est amené au carter primaire par un arbre de transmission central (36) et est dirigé sur les carters secondaires (35) par l'intermédiaire d'arbres de transmission télescopiques (37 et 38). L'entraînement des rotors (2) est assuré par des arbres qui sont logés dans les tronçons latéraux (30 et 31) et qui sont reliés entre eux par des accouplements mobiles situés au niveau des axes d'articulation (32).

La partie avant (13) de la structure centrale (8) comporte des roues d'appui (39) qui roulent sur le sol au travail et au transport. Dans la position de travail, elles portent la partie avant (13) de la structure centrale en vue de décharger la partie arrière (14) et notamment les roues (5) des rotors (2) en vue d'un meilleur suivi des dénivellations du sol. Dans la position de transport, elles portent en sus la partie arrière (14) et les structures latérales (9 et 10). Lesdites roues (39) sont disposées sur des supports (40) déplaçables dans le sens de la hauteur. Dans l'exemple de la figure 3, les supports (40) sont fixés sur une équerre (41) qui est articulée sur la structure centrale (8) au moyen d'un axe (42). Cette équerre (41) est en sus reliée à un quatrième vérin hydraulique (43) qui permet de la déplacer autour de l'axe (42) pour lever ou abaisser les roues d'appui (39). Ledit support (40) peut aussi être télescopique.

Pour passer de la position de travail (figure 1) dans la position de transport (figures 2 et 3), l'utilisateur actionne les troisièmes vérins hydrauliques (33) pour qu'ils replient les deux tronçons latéraux (31) extérieurs sur les tronçons voisins. Ensuite, il actionne les premiers vérins hydrauliques (26 et 27) de sorte qu'ils soulèvent les structures latérales (9 et 10) autour des axes d'articulation (24 et 25) sensiblement horizontaux jusque dans une position où les roues (5) des rotors (2) ne touchent plus le sol. Enfin, il actionne les deuxièmes vérins hydrauliques (28 et 29) de sorte qu'ils déplacent les structures latérales (9 et 10) vers l'avant autour des axes d'articulation (11 et 12) sensiblement verticaux. Dans cette position les deux structures latérales (9 et 10) sont sensiblement parallèles, la largeur totale de la machine étant alors inférieure à la largeur totale dans la position de travail des deux rotors (2) situés au milieu de la machine. Lesdites structures latérales (9 et 10) peuvent alors reposer sur des appuis prévus sur la structure centrale (8) et peuvent y être immobilisées. Enfin, les roues (39) de la structure centrale (8) sont abaissées au moyen du quatrième vérin hydraulique (43) afin d'augmenter la garde au sol. Ces deux roues (39) portent alors l'ensemble de la machine qui peut suivre le tracteur aussi facilement qu'une remorque à un essieu.

Pour la mise en position de travail, les opérations décrites ci-dessus sont inversées.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection.

## Revendications

1. Machine de fenaison, notamment une faneuse, comportant un bâti (1) portant plusieurs rotors de fanage (2) pouvant être entraînés en rotation autour d'axes (4) sensiblement verticaux ou inclinés vers une direction d'avancement (A) et possédant des bras porte-fourches (6) qui sont disposés à des distances sensiblement régulières les uns des autres, lesquels rotors (2) peuvent occuper une position de travail dans laquelle ils sont alignés suivant une ligne sensiblement perpendiculaire à la direction d'avancement (A) et dans laquelle les bras porte-fourches (6) de chaque rotor (2) pénètrent dans les intervalles entre les bras porte-fourches (6) des rotors (2) voisins et une position de transport dans laquelle des rotors (2) sont repliés vers le milieu de la machine en vue de réduire sa largeur, le bâti (1) comportant une structure centrale (8) qui est démunie de rotors (2) et deux structures latérales (9 et 10), qui portent tous les rotors (2), ***caractérisé par le fait* que** la structure centrale (8) se compose d'une partie avant (13) munie de roues (39) et d'une partie arrière (14) qui est articulée sur ladite partie avant (13) et qui porte des axes sensiblement verticaux (11 et 12) sur lesquels sont articulées les structures latérales (9 et 10) et autour desquels ces structures latérales sont déplaçables avec tous les rotors (2) vers l'avant pour le transport.

2. Machine selon la revendication 1, ***caractérisée par le fait* que** les axes d'articulation sensiblement verticaux (11 et 12) des structures latérales (9 et 10) sur la structure centrale (8) se situent entre les axes de rotation (4') des deux rotors (2) situés au milieu de la machine de manière à réduire davantage sa largeur au transport.

3. Machine selon la revendication 1, ***caractérisée par le fait* que** la partie arrière (14) est articulée sur la partie avant (13) au moyen d'une articulation à axes sensiblement horizontaux (15 et 16) qui sont solidaires de la partie arrière (14) et qui sont guidés dans des orifices (17 et 18) allongés verticalement de la partie avant (13).

4. Machine selon la revendication 3, ***caractérisée par le fait* qu'**au moins un des axes sensiblement horizontaux (15 et 16) est guidé dans l'orifice allongé (17, 18) correspondant de manière à limiter les déplacements de la partie arrière (14) vers la droite et vers la gauche par rapport à la partie avant (13).

5. Machine selon la revendication 3, ***caractérisée par le fait* qu'**elle comporte un organe de réglage (21) qui est articulé sur la partie avant (13) et sur la partie arrière (14) et qui est décalé en hauteur par rapport audits axes sensiblement horizontaux (15 et 16), en vue de modifier l'inclinaison des axes de rotation (4') des rotors (2).

6. Machine selon la revendication 1, ***caractérisée par le fait* que** chaque structure latérale (9, 10) comporte un axe d'articulation (24, 25) sensiblement horizontal qui est dirigé dans la direction d'avancement (A) en position de travail et qui est disposé sur une partie située entre les axes de rotation (4') des deux rotors (2) situés au milieu de la machine.

7. Machine selon la revendication 6, ***caractérisée par le fait* que** l'axe d'articulation (11, 12) sensiblement vertical et l'axe d'articulation (24, 25) sensiblement horizontal de chacune des structures latérales (9 et 10) se situent dans un même plan sensiblement vertical.

8. Machine selon la revendication 6, ***caractérisée par le fait* qu'**un premier vérin hydraulique (26, 27) est associé à chaque structure latérale (9, 10) pour la déplacer autour de l'axe d'articulation (24, 25) sensiblement horizontal correspondant.

9. Machine selon la revendication 8, ***caractérisée par le fait* que** chaque premier vérin hydraulique (26, 27) est relié à une structure latérale (9, 10) et à l'extrémité supérieure de l'axe d'articulation (11, 12) sensiblement vertical correspondant.

10. Machine selon la revendication 1, ***caractérisée par le fait* que** les roues d'appui (39) de la partie avant (13) de la structure centrale (8) sont disposées sur des supports (40) déplaçables dans le sens de la hauteur.

11. Machine selon la revendication 1, ***caractérisée par le fait* qu'**elle comporte des deuxièmes vérins hydrauliques (28, 29) reliés à la partie arrière (14) de la structure centrale (8) et aux structures latérales (9 et 10) de manière à pouvoir déplacer ces dernières autour de leurs axes d'articulation (11 et 12) sensiblement verticaux.

12. Machine selon l'une quelconque des revendications précédentes, ***caractérisée par le fait* que** chaque structure latérale (9, 10) comporte un tronçon intérieur (30) portant deux rotors (2) et plusieurs tronçons latéraux (31) portant chacun un rotor (2) lesdits tronçons intérieurs (30) et latéraux (31) étant articulés entre eux au moyen d'axes (32) dirigés dans la direction d'avancement (A) en position de travail.

13. Machine selon la revendication 12, ***caractérisée par le fait* qu'**au moins le tronçon latéral (31) le plus à l'extérieur de chaque structure latérale (9, 10) est repliable d'un angle d'environ 180° autour de son axe d'articulation (32) au moyen d'un troisième vérin hydraulique (33).

14. Machine selon l'une quelconque des revendications précédentes, ***caractérisée par le fait* que** pour l'entraînement en rotation des rotors (2) elle comporte un carter d'entraînement primaire (34) disposé sur la partie avant (13) de la structure centrale (8) et un carter d'entraînement secondaire (35) disposé sur chaque structure latérale (9, 10), ledit carter primaire (34) étant relié à chaque carter secondaire (35) par des arbres de transmission télescopiques (37 et 38).

## Patentansprüche

1. Heuwerbungsmaschine, insbesondere Heuwender, mit einem Gestell (1), das mehrere Wenderotoren (2) trägt, die in Drehung um im Wesentlichen vertikale oder in eine Vorschubrichtung (A) geneigte Achsen (4) angetrieben werden können, und Gabeltragarme (6) besitzen, die in im Wesentlichen regelmäßigen Abständen zueinander angeordnet sind, wobei die Rotoren (2) eine Arbeitsstellung, in der sie auf einer im Wesentlichen zur Vorschubrichtung (A) senkrechten Linie ausgerichtet sind, und in der die Gabeltragarme (6) jedes Rotors (2) in die Zwischenräume zwischen den Gabeltragarmen (6) der benachbarten Rotoren (2) eindringen, und eine Transportstellung, in der die Rotoren zur Mitte der Maschine eingeklappt sind, um ihre Breite zu verringern, einnehmen können, wobei das Gestell (1) eine zentrale Struktur (8) ohne Rotoren (2) und zwei seitliche Strukturen (9 und 10), die alle Rotoren (2) tragen, umfasst, ***dadurch gekennzeichnet,* dass** die zentrale Struktur (8) aus einem vorderen Teil (13), der mit Rädern (39) versehen ist, und einem hinteren Teil (14) besteht, der auf dem vorderen Teil (13) angelenkt ist und im Wesentlichen vertikale Achsen (11 und 12) trägt, auf denen die seitlichen Strukturen (9 und 10) angelenkt sind und um die diese seitlichen Strukturen mit allen Rotoren (2) für den Transport nach vorne verschoben werden können.

2. Maschine nach Anspruch 1, ***dadurch gekennzeichnet,* dass** die im Wesentlichen vertikalen Gelenkachsen (11 und 12) der seitlichen Strukturen (9 und 10) auf der zentralen Struktur (8) zwischen den Drehachsen (4') der beiden Rotoren (2), die sich in der Mitte der Maschine befinden, angeordnet sind, um ihre Breite beim Transport weiter zu verringern.

3. Maschine nach Anspruch 1, ***dadurch gekennzeichnet,* dass** der hintere Teil (14) auf dem vorderen Teil (13) mittels eines Gelenks mit im Wesentlichen horizontalen Achsen (15 und 16) angelenkt ist, die mit dem hinteren Teil (14) fest verbunden sind und in vertikal länglichen Öffnungen (17 und 18) zum vorderen Teil (13) geführt werden.

4. Maschine nach Anspruch 3, ***dadurch gekennzeichnet,* dass** mindestens eine der im Wesentlichen horizontalen Achsen (15 und 16) in der entsprechenden länglichen Öffnung (17, 18) geführt wird, um die Verschiebungen des hinteren Teils (14) nach rechts und nach links in Bezug zum vorderen Teil (13) zu begrenzen.

5. Maschine nach Anspruch 3, ***dadurch gekennzeichnet,* dass** sie ein Einstellelement (21) umfasst, das auf dem vorderen Teil (13) und auf dem hinteren Teil (14) angelenkt und in der Höhe in Bezug zu den im Wesentlichen horizontalen Achsen (15 und 16) versetzt ist, um die Neigung der Drehachsen (4') der Rotoren (2) zu verändern.

6. Maschine nach Anspruch 1, ***dadurch gekennzeichnet,* dass** jede seitliche Struktur (9, 10) eine im Wesentlichen horizontale Gelenkachse (24, 25) umfasst, die in Arbeitsstellung in die Vorschubrichtung (A) gerichtet ist, und die auf einem Teil angeordnet ist, der sich zwischen den Drehachsen (4') der beiden in der Mitte der Maschine befindlichen Rotoren (2) befindet.

7. Maschine nach Anspruch 6, ***dadurch gekennzeichnet,* dass** die im Wesentlichen vertikale Gelenkachse (11, 12) und die im Wesentlichen horizontale Gelenkachse (24, 25) jeder der seitlichen Strukturen (9 und 10) in einer selben im Wesentlichen vertikalen Ebene angeordnet sind.

8. Maschine nach Anspruch 6, ***dadurch gekennzeichnet,* dass** ein erster Hydraulikzylinder (26, 27) mit jeder seitlichen Struktur (9, 10) verbunden ist, um sie um die entsprechende im Wesentlichen horizontale Gelenkachse (24, 25) zu verschieben.

9. Maschine nach Anspruch 8, ***dadurch gekennzeichnet,* dass** jeder erste Hydraulikzylinder (26, 27) mit einer seitlichen Struktur (9, 10) und mit dem oberen Ende der entsprechenden im Wesentlichen vertikalen Gelenkachse (11, 12) verbunden ist.

10. Maschine nach Anspruch 1, ***dadurch gekennzeichnet,* dass** die Stützräder (39) des vorderen Teils (13) der zentralen Struktur (8) auf in Richtung der Höhe verschiebbaren Trägem (40) angeordnet sind.

11. Maschine nach Anspruch 1, ***dadurch gekennzeichnet,* dass** sie zweite Hydraulikzylinder (28, 29) umfasst, die mit dem hinteren Teil (14) der zentralen Struktur (8) und den seitlichen Strukturen (9 und 10) verbunden sind, um diese letztgenannten um ihre im Wesentlichen vertikalen Gelenkachsen (11 und 12) zu verschieben.

12. Maschine nach irged einem der vorhergehenden Ansprüche, ***dadurch gekennzeichnet,* dass** jede seitliche Struktur (9, 10) einen inneren Abschnitt (30), der zwei Rotoren (2) trägt, und mehrere seitliche Abschnitte (31), die jeweils einen Rotor (2) tragen, umfasst, wobei die inneren (30) und seitlichen Abschnitte (31) aneinander mittels Achsen (32) angelenkt sind, die in Arbeitsstellung in Vorschubrichtung (A) gerichtet sind.

13. Maschine nach Anspruch 12, ***dadurch gekennzeichnet,* dass** mindestens der am weitesten außen befindliche seitliche Abschnitt (31) jeder seitlichen Struktur (9, 10) um einen Winkel von ungefähr 180° um seine Gelenkachse (32) mittels eines dritten Hydraulikzylinders (33) einklappbar ist.

14. Maschine nach irgend einem der vorhergehenden Ansprüche, ***dadurch gekennzeichnet,* dass** sie für den Drehantrieb der Rotoren (2) ein primäres Antriebsgehäuse (34), das auf dem vorderen Teil (13) der zentralen Struktur (8) angeordnet ist, und ein sekundäres Antriebsgehäuse (35), das auf jeder seitlichen Struktur (9, 10) angeordnet ist, umfasst, wobei das primäre Gehäuse (34) mit jedem sekundären Gehäuse (35) durch teleskopartige Übertragungswellen (37 und 38) verbunden ist.

## Claims

1. Haymaking machine, in particular a tedder, comprising a frame (1) carrying several tedding rotors (2) being able to be driven in rotation about axes (4) which are substantially vertical or inclined towards a direction of advance (A) and having fork-holder arms (6) which are arranged at substantially regular distances from one another, which rotors (2) can occupy a work position in which they are aligned along a line substantially perpendicular to the direction of advance (A) and in which the fork-holder arms (6) of each rotor (2) penetrate in the intervals between the fork-holder arms (6) of the adjacent rotors (2), and a transport position in which some rotors (2) are folded towards the centre of the machine with a view to reducing its width, the frame (1) comprising a central structure (8) without rotors (2) and two lateral structures (9 and 10) which carry all the rotors (2), ***characterized in* that** the central structure (8) is composed of a front part (13) provided with wheels (39) and a rear part (14) which is articulated on the said front part (13) and which carries substantially vertical axes (11 and 12) on which the lateral structures (9 and 10) are articulated and about which these lateral structures are movable with all the rotors (2) towards the front for transport.

2. Machine according to claim 1, ***characterized in* that** the substantially vertical articulation axes (11 and 12) of the lateral structures (9 and 10) on the central structure (8) are situated between the rotation axes (4') of the two rotors (2) situated in the centre of the machine so as to further reduce its width during transport.

3. Machine according to claim 1, ***characterized in* that** the rear part (14) is articulated on the front part (13) by means of an articulation with substantially horizontal axes (15 and 16) which are rigidly fastened to the rear part (14) and which are guided in vertically elongated orifices (17 and 18) of the front part (13).

4. Machine according to claim 3, ***characterized in* that** at least one of the substantially horizontal axes (15 and 16) is guided in the corresponding elongated orifice (17, 18) so as to limit the movements of the rear part (14) towards the right and towards the left with respect to the front part (13).

5. Machine according to claim 3, ***characterized in* that** it comprises an adjustment element (21) which is articulated on the front part (13) and on the rear part (14) and which is offset in height with respect to the said substantially horizontal axes (15 and 16), with a view to modifying the inclination of the rotation axes (4') of the rotors (2).

6. Machine according to claim 1, ***characterized in* that** each lateral structure (9, 10) comprises a substantially horizontal articulation axis (24, 25) which is directed in the direction of advance (A) in work position and which is arranged on a part situated between the rotation axes (4') of the two rotors (2) situated in the centre of the machine.

7. Machine according to claim 6, ***characterized in* that** the substantially vertical articulation axis (11, 12) and the substantially horizontal articulation axis (24, 25) of each of the lateral structures (9 and 10) are situated in a same substantially vertical plane.

8. Machine according to claim 6, ***characterized in* that** a first hydraulic jack (26, 27) is associated with each lateral structure (9, 10) to move it about the corresponding substantially horizontal articulation axis (24, 25).

9. Machine according to claim 8, ***characterized in* that** each first hydraulic jack (26, 27) is connected to a lateral structure (9, 10) and to the upper end of the corresponding substantially vertical articulation axis (11, 12).

10. Machine according to claim 1, ***characterized in* that** the support wheels (39) of the front part (13) of the central structure (8) are arranged on supports (40) which are movable in the vertical direction.

11. Machine according to claim 1, ***characterized in* that** it comprises second hydraulic jacks (28, 29) connected to the rear part (14) of the central structure (8) and to the lateral structures (9 and 10) so as to be able to move these latter about their substantially vertical articulation axes (11 and 12).

12. Machine according to any one of the preceding claims, ***characterized in* that** each lateral structure (9, 10) comprises an inner section (30) carrying two rotors (2) and several lateral sections (31) each carrying a rotor (2), the said inner section (30) and lateral sections (31) being articulated with one another by means of axes (32) directed in the direction of advance (A) in work position.

13. Machine according to claim 12, ***characterized in* that** at least the lateral section (31) the most at the exterior of each lateral structure (9, 10) is foldable by an angle of approximately 180° about its articulation axis (32) by means of a third hydraulic jack (33).

14. Machine according to any one of the preceding claims, ***characterized in* that** for the driving in rotation of the rotors (2) it comprises a primary drive casing (34) arranged on the front part (13) of the central structure (8) and a secondary drive casing (35) arranged on each lateral structure (9, 10), the said primary casing (34) being connected to each secondary casing (35) by telescopic transmission shafts (37 and 38).
